# EUROPÄISCHE PATENTANMELDUNG

(11) **EP 3 202 858 A1**
(43) Veröffentlichungstag der Anmeldung: **09.08.2017**
(21) Anmeldenummer: 16000253.1
(22) Anmeldetag: 02.02.2016
(51) Int. Cl.: C09C 1/36, C09D 7/00, C09D 7/12, C09C 3/06, C09C 3/08, C09C 3/12, C08K 3/22, C09C 1/24

(54) **HERSTELLUNG VON MATTEN LACKEN UND DRUCKFARBEN**

(71) Anmelder: Kronos International, Inc., 51373 Leverkusen (DE)
(72) Erfinder: Mersch, Frank, 42799 Leichlingen (DE); Juergens, Volker, 57399 Kirchhundem (DE)

(57) **Zusammenfassung**

Die Erfindung richtet sich auf ein Mattierungsmittel und eine Pigmentzusammensetzung zur Herstellung von pigmentierten matten Beschichtungen wie z. B. matten Lacken oder Druckfarben. Insbesondere betrifft die Erfindung mit Titandioxid pigmentierte matte Beschichtungen wie Lacke und Druckfarben.

Das Mattierungsmittel enthält oberflächenbehandelte anorganische Pigmentpartikel insbesondere Titandioxid mit einer mittleren Parfikelaräße d50 im Rereich von 2 bis 200 µm Die Pigmentzusammensetzung enthält anorganische Pigmentpartikel insbesondere Titandioxid mit einer bimodalen massebezogenen Partikelgrößenverteilung, wobei die erste Partikelfraktion eine pigmentäre Partikelgröße und die zweite Partikelfraktion eine mittlere Partikelgröße d50 im Bereich von 2 bis 200 µm aufweist und wobei die erste und die zweite Partikelfraktion einer gleichen Oberflächenbehandlung unterzogen worden sind.

## Beschreibung

### Gebiet der Erfindung

Die Erfindung richtet sich auf ein Mattierungsmittel und eine Pigmentzusammensetzung zur Herstellung von pigmentierten matten Beschichtungen wie z. B. matten Lacken oder Druckfarben. Insbesondere betrifft die Erfindung mit Titandioxid pigmentierte matte Beschichtungen wie Lacke und Druckfarben.

### Technologischer Hintergrund der Erfindung

Die Mattierung einer Oberfläche wird durch eine gezielte Aufrauhung der Oberfläche im Mikrobereich bewirkt. Einfallendes Licht wird dadurch nicht mehr gerichtet, sondern diffus reflektiert. Höho, Form und Anzahl dor Oberflächenstrukturen bestimmen den Clanzgrad des Lackfilms oder der Druckfarbe.

Zur Erzielung einer matten Oberfläche werden der Lack- oder Druckfarbenzusammensetzung üblicherweise spezielle Mattierungsmittel zugesetzt. Die üblichen Mattierungsmittel sind sphärische Partikel mit einer Partikelgröße im Bereich von 1 bis etwa 20 µm in Abhängigkeit von der Filmschichtdicke. Als Mattierungsmittel finden in der Praxis vorwiegend gefällte oder pyrogene Kieselsäuren oder Kieselgele Verwendung, daneben auch Mattierungsmittel auf Basis von Duromeren, Wachsen oder Thermoplasten. Bekannt ist weiterhin die Eignung von Silikaten (Diatomeenerde, calcinierter Kaolin etc.), Calciumcarbonat und verschiedenen Arten von Hohlkugeln.

Beispielsweise offenbart EP 1 398 301 B1 Mattierungsmittel für Farben und Lacke basierend auf gefällten Kieselsäuren, die Partikelgrößen (d50) im Bereich von 5 bis 15 µm und eine spezifische Oberfläche (BET) von 350 bis 550 m²/g aufweisen. Optional sind die Kieselsäuren mit Wachs beschichtet.

DE 195 16 253 A1 offenbart Mattierungsmittel auf Basis von sprühgetrocknetem Kieselgel. Um eine ausreichende Stabilität der Aggregate zu gewährleisten, wird ein Bindemittel (Schichtsilikat, pyrogenes SiO₂ oder organisches Polymer) eingesetzt. Das Mattierungsmittel weist eine Partikelgröße von 1 bis 20 µm und ein spezifisches Porenvolumen von 0,4 bis 2,5 ml/g auf.

Die Erfahrung hat gezeigt, dass der Mattierungseffekt mit der Dosierung des Mattierungsmittels steigt. Größere Partikel haben eine höhere Mattierungswirkung, führen aber zu einer weniger glatten Oberfläche. Desweiteren führen sowohl höhere Gehalte an Mattierungsmittel wie auch eine längere Dispergierzeit zu steigenden Viskositäten der Lacksysteme und damit zu Verarbeitungsproblemen.
Desweiteren sind die bekannten Mattierungsmittel auf Basis von Kieselsäure wegen starker Staubneigung schwierig zu handhaben.

Gemäß Patentanmeldung EP 15003103 werden diese Nachteile durch die Verwendung von Pigmentagglomeraten einer mittleren Größe d50 von 2 µm bis 200 µm bei der Herstellung von matten Lacken und Druckfarben vermieden. Das Verfahren zeichnet sich dadurch aus, dass die Pigmentagglomerate während der Dispergierung beispielsweise in einer Perlmühle teilweise zerfallen, jedoch keine Viskositätserhöhung auftritt. Ein weiteres Merkmal des Verfahrens besteht darin, dass das Mattierungsmittel und das Pigment gleiche chemische Zusammensetzung und Oberflächeneigenschaften aufweisen. Ein Nachteil des Verfahrens besteht darin, dass der Mattierungsgrad wegen des teilweisen Zerfalls der Pigmentagglomerate signifikant von der eingebrachten Dispergierenergie abhängt.

Es besteht somit ein Bedarf für ein Mattierungsmittel zur Herstellung matter Beschichtungen, das wenig staubend und dispergierstabil ist und das reproduzierbar homogen matt erscheinende Oberflächen ermöglicht.
Es besteht weiterhin der Bedarf für ein Verfahren zur Herstellung matter pigmentierter Beschichtungen, bei welchem das Mattierungsmittel zwar Pigmentzusammensetzung aufweist, aber die Mattierungswirkung nicht durch die Art der Dispergierung beeinflusst wird.

### Aufgabenstellung und Kurzbeschreibung der Erfindung

Der Erfindung liegt die Aufgabe zugrunde, ein alternatives Verfahren zur Herstellung pigmentierter matter Beschichtungen anzugeben, ein entsprechendes Mattierungsmittel sowie ein Verfahren zur Herstellung.

Die Aufgabe wird gelöst durch ein Mattierungsmittel zur Herstellung von matten Beschichtungen enthaltend oberflächenbehandelte anorganische Pigmentpartikel mit einer mittleren Partikelgröße d50 im Bereich von 2 bis 200 µm, bevorzugt 2 bis 100 µm, insbesondere 2 bis 50 µm oder insbesondere bevorzugt 2 bis 20 µm.

Die Aufgabe wird des Weiteren gelöst durch eine Pigmentzusammensetzung zur Herstellung von matten Beschichtungen dadurch gekennzeichnet, dass
die Pigmentzusammensetzung anorganische Pigmentpartikel mit einer bimodalen massebezogenen Partikelgrößenverteilung enthält,
wobei die erste Partikelfraktion eine pigmentäre Partikelgröße aufweist und die zweite Partikelfraktion eine mittlere Partikelgröße d50 im Bereich von 2 bis 200 µm, bevorzugt 2 bis 100 µm, insbesondere 2 bis 50 µm und insbesondere bevorzugt 2 bis 20 µm aufweist und wobei die erste und die zweite Partikelfraktion einer gleichen Oberflächenbehandlung unterzogen worden sind.

Die Aufgabe wird des Weiteren gelöst durch ein Verfahren zur Herstellung einer Pigmentzusammensetzung für matte Beschichtungen, umfassend die Schritte:
- Bereitstellung einer ersten Pigmentpartikelfraktion mit einer pigmentären Partikelgröße und
- Bereitstellung einer zweiten Pigmentpartikelfraktion mit einer mittleren Partikelgröße d50 im Bereich von 2 bis 200 µm, bevorzugt 2 bis 100 µm, insbesondere 2 bis 50 µm und insbesondere bevorzugt 2 bis 20 µm,
- Oberflächenbehandlung der ersten und zweiten Pigmentpartikelfraktion in wässriger Suspension, wobei
entweder die erste und zweite Pigmentpartikelfraktion gemeinsam in einer Suspension oberflächenbehandelt werden
oder die erste und die zweite Pigmentpartikelfraktion jeweils separat in einer Suspension auf gleiche Art und Weise oberflächenbehandelt werden.

Weitere vorteilhafte Ausformungen der Erfindung sind in den Unteransprüchen angegeben.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.
Unter "mittlere Partikelgröße" wird im Rahmen der Erfindung der massebezogene Median d50 (im Folgenden: d50) der Partikelgrößenverteilung verstanden.

Unter Pigment werden im Folgenden gemäß DIN 55 943 im Anwendungsmedium praktisch unlösliche Farbmittel verstanden, die in dem Anwendungsmedium weder chemisch noch physikalisch verändert werden und ihre partikuläre Struktur behalten. Sie werden zur Farbgebung eingesetzt, welche auf einer Interaktion der Pigmentpartikel mit dem sichtbaren Licht durch Absorption und Remission beruht.
Unter "pigmentärer Partikelgröße" wird im Rahmen der Erfindung der Bereich 0,1 bis 1 µm für die mittlere Partikelgröße d50 verstanden.

Eine erste Ausführung der Erfindung umfasst ein Mattierungsmittel zur Herstellung von matten Beschichtungen, welches oberflächenbehandelte anorganische Pigmentpartikel mit einer mittleren Partikelgröße (d50) im Bereich von 2 bis 200 µm, bevorzugt 2 bis 100 µm, insbesondere 2 bis 50 µm oder insbesondere bevorzugt 2 bis 20 µm enthält.

Für das erfindungsgemäße Mattierungsmittel sind als anorganische Pigmentpartikel beispielsweise Weißpigmente wie Titandioxid sowie Eisenoxid und andere Buntpigmente geeignet. Bevorzugt ist Titandioxid.
Bei Titandioxid kann es sich beispielsweise um einen Rutil handeln, der nach dem Sulfat- oder Chloridverfahren hergestellt ist. Die Partikel können eine Partikelgröße d50 von 2 µm bis etwa 2 mm aufweisen und gegebenenfalls auf den gewünschten Partikelgrößenbereich heruntergemahlen werden. Die Mahlung kann beispielsweise in einer Rührwerkskugelmühle, Pendelmühle oder Walzenmühle erfolgen. Bei der Titandioxidherstellung nach dem Sulfatverfahren wird die gewünschte Partikelgröße bei der Calcinierung durch Zusatz bestimmter Additive, längere Calcinierzeiten und/oder höhere Calciniertemperaturen erreicht. Die erzeugten Partikel zeichnen sich durch eine stärkere Versinterung aus und sind deswegen während der nachfolgenden Dispergierung im Rahmen der Anwendung in Beschichtungen sehr stabil, d.h. sie zerfallen nicht.
In einer besonderen Ausführung können einem Sinterprozess unterworfene Titandioxidpartikel aus dem Chloridverfahren (sogenannte Scheuerteilchen / Scrub Solids) eingesetzt werden.

Erfindungsgemäß weisen die Partikel des erfindungsgemäßen Mattierungsmittels eine mittlere Partikelgröße (d50) im Bereich von 2 bis 200 µm, bevorzugt 2 bis 100 µm, insbesondere 2 bis 50 µm oder insbesondere bevorzugt 2 bis 20 µm auf. Die erforderliche Partikelgröße wird gegebenenfalls durch Mahlung und/oder Klassierung beispielsweise mittels Sichtung eingestellt. Dem Fachmann sind die entsprechenden Verfahrensweisen bekannt.

Anschließend werden die Pigmentpartikel oberflächenbehandelt mit anorganischen und/oder organischen Verbindungen. Die Oberflächenbehandlung entspricht der bei Pigmenten üblicherweise angewandten Oberflächenbeschichtung. Die Beschichtungssubstanzen sind beispielsweise Si-, Al-, Ti-, Zr-, Sn-, Ce- oder P-Verbindungen oder organische Verbindungen wie Silane, Siloxane, Trimethylolpropan (TMP), Trimethylolethan (TME), Hexametaphosphat (HMP), etc. Auf diese Weise weist das Mattierungsmittel ähnliche Oberflächeneigenschaften auf wie ein üblicherweise eingesetztes Pigment, beispielsweise in Bezug auf Dispergiereigenschaften und Matrixverträglichkeit, insbesondere gegenüber oberflächenaktiven Additiven.
Bei der Oberflächenbehandlung können eine oder mehrere Schichten oder Mischschichten der Beschichtungssubstanzen aufgebracht werden.
In einer besonderen Ausführung der Erfindung enthält die äußere Schicht des oberflächenbehandelten Partikels AI-Verbindungen, insbesondere Aluminiumoxid bzw. wasserhaltiges Aluminiumoxid.
Die Oberflächenbehandlung wird beispielsweise durch Fällung der Beschichtungssubstanzen auf die Partikel in wässriger Suspension durchgeführt. Diese Verfahren sind insbesondere aus der Titandioxidpigmenttechnologie bekannt und können erfindungsgemäß angewendet werden.
Die Schichtdicke der im Rahmen der Oberflächenbehandlung auf die Partikel aufgebrachten Oberflächenbeschichtung liegt im Nanometerbereich, bevorzugt weniger als 10 nm, so dass sich die Partikelgröße der oberflächenbehandelten Partikel gegenüber den unbehandelten Partikel nicht signifikant verändert.

Im Anschluss an die Oberflächenbehandlung werden die Partikel abgetrennt, filtriert gewaschen und getrocknet und optional mikronisiert, beispielsweise in einer Dampfstrahlmühle.

Das erfindungsgemäße Mattierungsmittel zeichnet sich durch folgende Vorteile gegenüber dem Stand der Technik aus:
- kostengünstige Herstellung,
- kein Viskositätsanstieg und keine Veränderung der Mattierungswirkung während des Dispergierprozesses in der Lackanwendung,
- nur geringfügige Anpassung der Formulierung gegenüber glänzenden Lacken erforderlich wegen ähnlichen Viskositäts- und Matrixverhaltens.

Das erfindungsgemäße Mattierungsmittel kann ebenso wie die bekannten und kommerziell angebotenen Mattierungsmittel zur Herstellung mattierter Beschichtungen wie Lacke, Farben und Druckfarben verwendet werden.

In einer zweiten Ausführung umfasst die Erfindung eine Pigmentzusammensetzung für Beschichtungen wie Lacke, Farben und Druckfarben, die anorganische Pigmentpartikel mit einer bimodalen massebezogenen Partikelgrößenverteilung enthält, die einerseits als Pigment und andererseits als Mattierungsmittel fungiert, so dass der Einsatz eines zusätzlichen Mattierungsmittel zur Erzeugung mattierter Oberflächen entfallen kann.

Unter Pigment werden im Folgenden gemäß DIN 55 943 im Anwendungsmedium praktisch unlösliche Farbmittel verstanden, die in dem Anwendungsmedium weder chemisch noch physikalisch verändert werden und ihre partikuläre Struktur behalten. Sie werden zur Farbgebung eingesetzt, welche auf einer Interaktion der Pigmentpartikel mit dem sichtbaren Licht durch Absorption und Remission beruht. Im Rahmen der Erfindung wird unter "pigmentärer Partikelgröße" der Bereich 0,1 bis 1 µm für die mittlere Partikelgröße d50 verstanden.

Erfindungsgemäß kommen bevorzugt anorganische Pigmente, Weißpigmente wie beispielsweise Titandioxid und Buntpigmente wie beispielsweise Eisenoxide zum Einsatz. Besonders bevorzugt ist Titandioxid.

In der fertigen Beschichtung sorgt die erste pigmentäre Pigmentpartikelfraktion (erste Partikelfraktion) für die Pigmentierung und die zweite grobere Pigmentpartikelfraktion (d50 im Bereich von 2 bis 200 µm) (zweite Partikelfraktion) für die angestrebte Oberflächenrauigkeit.

Pigmentpartikel weisen üblicherweise eine Partikelgröße von etwa 0,1 bis 1 µm auf. Titandioxidpigmente weisen üblicherweise eine mittlere Partikelgröße d50 von 0,2 bis 0,5 µm auf. Um eine matte Oberfläche zu erzielen, muss wenigstens ein Teil der Partikel in der Pigmentzusammensetzung in einer größeren mittleren Partikelgröße d50 von beispielsweise 2 bis 200 µm, bevorzugt 2 bis 100 µm insbesondere 2 bis 50 µm oder insbesondere bevorzugt 2 bis 20 µm vorliegen.

In einer besonderen Ausführung enthält die Pigmentzusammensetzung Titandioxidpigmentpartikel. Im Falle der Verwendung von Titandioxid werden als Ausgangsmaterial für die erfindungsgemäße erste Partikelfraktion unbehandelte Titandioxidpartikel (Titandioxid-Grundkörper), üblicherweise hergestellt nach dem Sulfat- oder dem Chloridverfahren verwendet. Pigmentärer Titandioxid-Grundkörper weist üblicherweise eine mittlere Partikelgröße d50 von 0,2 bis 0,5 µm auf. Als zweite Partikelfraktion wird ein nicht-pigmentärer grober Titandioxid-Grundkörper eingesetzt mit einer mittleren Partikelgröße d50 2 bis 200 µm. Bei dem groben Titandioxid-Grundkörper kann es sich beispielsweise um einen Rutil handeln, der nach dem Sulfat- oder Chloridverfahren hergestellt ist. Die Partikel können eine Partikelgröße d50 von bis zu etwa 2 mm aufweisen und gegebenenfalls auf den gewünschten Partikelgrößenbereich heruntergemahlen und anschließend gegebenenfalls klassiert (beispielsweise durch Sichtung) werden. Die Mahlung kann beispielsweise in einer Rührwerkskugelmühle, Pendelmühle oder Walzenmühle erfolgen. Bei der Titandioxidherstellung nach dem Sulfatverfahren wird die gewünschte Partikelgröße bei der Calcinierung durch Zusatz 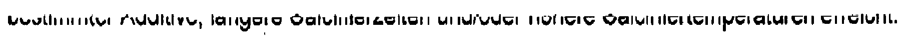 Die erzeugten Partikel zeichnen sich durch eine stärkere Versinterung aus und sind deswegen während der nachfolgenden Dispergierung im Rahmen der Anwendung in Beschichtungen sehr stabil, d.h. zerfallen nicht.
In einer besonderen Ausführung können einem Sinterprozess unterworfene Titandioxidpartikel aus dem Chloridverfahren (sogenannte Scheuerteilchen / Scrub Solids) eingesetzt werden.

Die pigmentären Partikel (erste Partikelfraktion) werden einer der nachfolgenden Verwendung angepassten Oberflächenbehandlung unterzogen. Beispielsweise werden Si-, Al-, Ti-, Zr-, Sn-, Ce- oder P-Verbindungen oder organische Verbindungen wie Silane, Siloxane, Trimethylolpropan (TMP), Trimethylolethan (TME), Hexametaphosphat (HMP), etc. als Beschichtungssubstanzen eingesetzt.

Erfindungsgemäß werden die groben Pigmentpartikel (zweite Partikelfraktion) der gleichen Oberflächenbehandlung unterzogen. Auf diese Weise weisen beide Partikelfraktionen annähernd gleiche Oberflächeneigenschaften auf, beispielsweise in Bezug auf Dispergiereigenschaften und Matrixverträglichkeit, insbesondere gegenüber oberflächenaktiven Additiven.
Die zweite Partikelfraktion weist eine mittlere Partikelgröße (d50) von 2 bis 200 µm bevorzugt 2 bis 100 µm, insbesondere 2 bis 50 µm und insbesondere bevorzugt 2 bis 20 µm auf.

Erfindungsgemäß liegt die zweite Partikelfraktion in einer Menge von 1 bis 10 Gew.-% bevorzugt 1 bis 6 Gew.-% in der Pigmentzusammensetzung vor.

Die Herstellung der erfindungsgemäßen Pigmentzusammensetzung erfolgt zunächst durch Bereitstellung der ersten und der zweiten Partikelfraktion. Die erste Partikelfraktion weist eine pigmentäre Partikelgröße auf die üblicherweise als mittlere Partikelgröße (d50) im Bereich von 0,1 bis 1 µm liegt. Im Falle von Titandioxidpigment beträgt die mittlere Partikelgröße d50 0,2 bis 0,5 µm. Die zweite Partikelfraktion weist eine mittlere Partikelgröße d50 von 2 bis 200 µm bevorzugt 2 bis 100 µm, insbesondere 2 bis 50 µm und insbesondere bevorzugt 2 bis 20 µm auf.
Die beiden Partikelfraktionen werden in wässriger Suspension einer Oberflächenbehandlung unterzogen, indem sie entweder gemeinsam in einer Suspension oberflächenbehandelt werden oder separat in jeweils einer Suspension auf gleiche Art und Weise behandelt werden.

In einer besonderen Ausführung wird eine Pigmentzusammensetzung auf Basis von Titandioxidpigment hergestellt. Bei der ersten Partikelfraktion werden unbehandelte Titandioxidpartikel (Titandioxid-Grundkörper), üblicherweise hergestellt nach dem Sulfat- oder dem Chloridverfahren verwendet. Pigmentärer Titandioxid-Grundkörper weist üblicherweise eine mittlere Partikelgröße d50 von 0,2 bis 0,5 µm auf.
Als zweite Partikelfraktion wird ein nicht-pigmentärer grober Titandioxid-Grundkörper eingesetzt mit einer mittleren Partikelgröße d50 2 bis 200 µm. Bei dem grobenTitandioxid-Grundkörper kann es sich beispielsweise um einen Rutil handeln, der nach dem Sulfat- oder Chloridverfahren hergestellt ist. Die Partikel können eine Partikelgröße d50 von bis zu etwa 2 mm aufweisen und gegebenenfalls auf den gewünschten Partikelgrößenbereich heruntergemahlen und anschließend gegebenenfalls klassiert (beispielsweise durch Sichtung) werden. Die Mahlung kann beispielsweise in einer Rührwerkskugelmühle, Pendelmühle oder Walzenmühle erfolgen. Bei der Titandioxidherstellung nach dem Sulfatverfahren wird die gewünschte Partikelgröße bei der Calcinierung durch Zusatz bestimmter Additive, längere Calcinierzeiten und/oder höhere Calciniertemperaturen erreicht. Die erzeugten Partikel zeichnen sich durch eine stärkere Versinterung aus und sind deswegen während der nachfolgenden Dispergierung im Rahmen der Anwendung in Beschichtungen sehr stabil, d.h. zerfallen nicht.
In einer besonderen Ausführung können einem Sinterprozess unterworfene Titandioxidpartikel aus den Chloridverfahren (sogenannte Scheuerteilchen / Scrub Solids) eingesetzt werden.

Anschließend werden beide Partikelfraktionen oberflächenbehandelt. Die Oberflächen behandlung entspricht der in der Titandioxidpigment-Technologie üblicherweise in wässriger Suspension durchgeführten Verfahrensweise. Bevorzugt werden gegebenenfalls wasserhaltige Metalloxide oder Phosphate aus wässriger Lösung auf der Partikeloberfläche abgeschieden. Üblich sind Oxide oder Phosphate von Silicium, Aluminium, Zirkon, Titan, Zinn, Cer etc. Dem Fachmann sind die entsprechenden Verbindungen und Verfahrensweisen zur Oberflächenbehandlung bekannt.

Die Oberflächenbehandlung beider Partikelfraktion erfolgt auf gleiche Art und Weise, indem entweder beide Partikelfraktionen gemeinsam in derselben Suspension behandelt werden oder indem jede Partikelfraktion jeweils separat in einer Suspension behandelt wird.
Im ersten Fall wird eine Suspension beider Partikelfraktionen mit einem Mengenanteil der zweiten Partikelfraktion von 1 bis 10 Gew.-% bevorzugt 1 bis 6 Gew.-% bezogen auf Gesamtpartikelmenge hergestellt. Anschließend werden die Partikel in der Suspension oberflächenbehandelt und wie üblich abgetrennt, gewaschen, getrocknet und wie üblich mikronisiert.
Im zweiten Fall werden die Partikelfraktionen jeweils separat in einer Suspension oberflächenbehandelt, anschließend abgetrennt, gewaschen, getrocknet, mikronisiert und zum Abschluss im trockenen Zustand im gewünschten Mengenverhältnis vermischt.

Die Mikronisierung erfolgt üblicherweise über eine Dampfstrahlmühle, währenddessen eine organische Verbindung wie z.B. TMP oder TME zugegeben werden kann. Dem Fachmann sind diese Verfahren bekannt.

Die erfindungsgemäße Pigmentzusammensetzung zur Herstellung von matten Beschichtungen zeichnen sich durch folgende Vorteile gegenüber dem Stand der Technik aus:
- kostengünstige Herstellung
- Kostenreduktion durch Einsparung des Mattierungsmittels
- weniger Prozessschritte und deswegen geringerer Zeitaufwand
- kein Viskositätsanstieg und keine Veränderung der Mattierungswirkung während des Dispergierprozesses
- nur geringfügige Anpassung der Formulierung gegenüber glänzenden Lacken erforderlich wegen ähnlichen Viskositäts- und Matrixverhaltens

Die erfindungsgemäße Pigmentzusammensetzung ist insbesondere zur Herstellung von mattierten Beschichtungen wie Lacke, Farben und Druckfarben geeignet.

## Patentansprüche

1. Mattierungsmittel zur Herstellung von matten Beschichtungen enthaltend oberflächenbehandelte anorganische Pigmentpartikel mit einer mittleren Partikelgröße (d50) im Bereich von 2 bis 200 µm, bevorzugt 2 bis 100 µm, insbesondere 2 bis 50 µm oder insbesondere bevorzugt 2 bis 20 µm.

2. Mattierungsmittel nach Anspruch 1 **dadurch gekennzeichnet, dass** es sich um Titandioxidpigmentpartikel handelt.

3. Mattierungsmittel nach Anspruch 1 oder 2 **dadurch gekennzeichnet, dass** die Partikel mit Verbindungen des Aluminium, Silicium, Titan, Zirkon, Zinn, Cer oder Phosphor und/oder mit organischen Verbindungen ausgewählt aus der Gruppe Silane, Siloxane, TMP, TME und HMP oberflächenbehandelt sind.

4. Pigmentzusammensetzung zur Herstellung von matten Beschichtungen **dadurch gekennzeichnet, dass**
die Pigmentzusammensetzung anorganische Pigmentpartikel mit einer bimodalen massebezogenen Partikelgrößenverteilung enthalt,
wobei die erste Partikelfraktion eine pigmentäre Partikelgröße aufweist und wobei die zweite Partikelfraktion eine mittlere Partikelgröße (d50) im Bereich von 2 bis 200 µm, bevorzugt 2 bis 100 µm, insbesondere 2 bis 50 µm oder insbesondere bevorzugt 2 bis 20 µm aufweist und
wobei die erste und die zweite Partikelfraktion einer Oberflächenbehandlung unterzogen worden sind.

5. Pigmentzusammensetzung nach Anspruch 4 **dadurch gekennzeichnet, dass** es sich um Titandioxidpigmentpartikel handelt.

6. Pigmentzusammensetzung nach Anspruch 4 oder 5 **dadurch gekennzeichnet, dass**
die Partikel mit Verbindungen des Aluminium, Silicium, Titan, Zirkon, Zinn, Cer oder Phosphor und/oder mit organischen Verbindungen ausgewählt aus der Gruppe Silane, Siloxane, TMP, TME und HMP oberflächenbehandelt sind.

7. Pigmentzusammensetzung nach einem oder mehreren der Ansprüche 4 bis 6 **dadurch gekennzeichnet, dass**
die erste und die zweite Partikelfraktion einer gleichen Oberflächenbehandlung unterzogen worden sind.

8. Pigmentzusammensetzung nach einem oder mehreren der Ansprüche 4 bis 7 **dadurch gekennzeichnet, dass**
die Pigmentzusammensetzung 1 bis 8 Gew.-% bevorzugt 3 bis 6 Gew.-% Partikel der zweiten Partikelfraktion enthält.

9. Verfahren zur Herstellung einer Pigmentzusammensetzung für matte Beschichtungen, umfassend die Schritte:
- Bereitstellung einer ersten anorganischen Pigmentpartikelfraktion mit einer pigmentären Partikelgröße und
- Bereitstellung einer zweiten anorganischen Pigmentpartikelfraktion mit einer mittleren Partikelgröße d50 im Bereich von 2 bis 200 µm, bevorzugt 2 bis 100 µm, insbesondere 2 bis 50 µm oder insbesondere bevorzugt 2 bis 20 µm,
- Oberflächenbehandlung der ersten und zweiten Pigmentpartikelfraktion in wässriger Suspension.

10. Verfahren nach Anspruch 9 **dadurch gekennzeichnet, dass** es sich um Titandioxidpigmentpartikel handelt.

11. Verfahren nach Anspruch 9 oder 10 **dadurch gekennzeichnet, dass** es sich um eine anorganische und/oder organische Oberflächenbehandlung handelt.

12. Verfahren nach einem oder mehreren der Ansprüche 9 bis 11 **dadurch gekennzeichnet, dass**
die Pigmentpartikel mit Verbindungen des Aluminium, Silicium, Titan, Zirkon, Zinn, Cer oder Phosphor und/oder mit organischen Verbindungen ausgewählt aus der Gruppe Silane, Siloxane, TMP, TME und HMP oberflächenbehandelt werden.

13. Verfahren nach einem oder mehreren der Ansprüche 9 bis 12 **dadurch gekennzeichnet, dass**
entweder die erste und zweite Pigmentpartikelfraktion gemeinsam oberflächenbehandelt werden oder dass
die erste und die zweite Pigmentpartikelfraktion jeweils separat, aber auf gleiche Art und Weise oberflächenbehandelt werden.

14. Verfahren zur Herstellung von pigmentierten matten Beschichtungen wie Lacken und Druckfarben **dadurch gekennzeichnet, dass** eine Pigmentzusammensetzung gemäß einem oder mehreren der Ansprüche 4 bis 13 eingesetzt wird.

15. Verfahren nach Anspruch 14 **dadurch gekennzeichnet, dass** kein zusätzliches Mattierungsmittel eingesetzt wird.
